# FASCICULE DE BREVET EUROPEEN

(11) **EP 0 364 346 B1**
(45) Date de publication et mention de la délivrance du brevet: **16.06.1993**
(21) Numéro de dépôt: 89402768.9
(22) Date de dépôt: 09.10.1989
(51) Int. Cl.: G02F 1/13, G02F 1/133

(54) **Boîte à lumière pour dispositif de visualisation avionique**
Beleuchtungsgehäuse für eine Avionik-Anzeigevorrichtung
Illumination box for an avionic display device

(30) Priorité: 11.10.1988 FR 8813339
(43) Date de publication de la demande: 18.04.1990
(73) Titulaire: THOMSON-CSF, 75008 Paris (FR)
(72) Inventeur: Buisson, Jean, F-92045 Paris la Défense (FR); Soubrier, Jean-Marie, F-92045 Paris la Défense (FR)
(74) Mandataire: Courtellemont, Alain

(56) Documents cités:
- EP-A- 0 274 269
- EP-A- 0 283 014
- GB-A- 2 195 196

## Description

L'invention concerne une boîte à lumière pour dispositif de visualisation avionique, ce dispositif comportant un écran à cristaux liquides transmettant la lumière fournie par la boîte à lumière. Cette boîte à lumière est particulièrement adaptée pour être utilisée alternativement en plein jour ou de nuit, et pour être compatible avec l'utilisation de jumelles à bas niveau de lumière.

La majorité des dispositifs de visualisation avionique qui comportent un écran à cristaux liquides est du type transmissif : la lumière nécessaire à l'observation de l'image est fournie par une source interne au dispositif de visualisation. Cette source de lumière est appelée boîte à lumière et est située directement derrière l'écran à cristaux liquides. Une boîte à lumière doit fournir une intensité lumineuse uniforme sur toute la surface de l'écran, et d'intensité adaptée à la lumière ambiante. En plein jour, l'intensité doit être suffisante pour que l'image ait un bon contraste. Quand il fait nuit, l'intensité doit être réduite pour ne pas éblouir l'observateur.

Dans les aéronefs militaires, il y a une contrainte supplémentaire : le dispositif de visualisation doit être compatible avec l'utilisation de jumelles à bas niveau de lumière, qui comportent un dispositif amplifiant les infrarouges. Le dispositif de visualisation doit donc émettre une lumière suffisamment pauvre en infrarouge pour ne pas éblouir un utilisateur de jumelles à bas niveau de lumière. D'autre part, la boîte à lumière doit dissiper peu de chaleur afin de ne pas endommager l'écran à cristaux liquides et de ne pas nécessiter de dispositif de refroidissement compliqué.

Il est connu de réaliser une boîte à lumière comportant plusieurs tubes fluorescents identiques entre eux, ou bien un tube unique replié en zigzag, de façon à couvrir toute la surface de l'écran à cristaux liquides. Pour obtenir un éclairage uniforme, un écran diffusant est intercalé entre les tubes et l'écran à cristaux liquides. Une boîte à lumière selon l'art connu est décrite dans EP-A-0 274 269.

Les tubes fluorescents présentent l'avantage d'avoir une bonne efficacité lumineuse, une bonne répartition de la lumière, et d'émettre dans un spectre adaptable aux caractéristiques chromatiques des filtres utilisés dans les écrans à cristaux liquides trichromes. Un tube fluorescent contient en général de la vapeur de mercure qui émet essentiellement un rayonnement ultraviolet qui est converti en rayonnement visible par un phosphore tapissant la paroi du tube. Par un choix convenable du phosphore, il est possible d'obtenir un rayonnement de longueur d'onde donnée. Par un mélange de plusieurs phosphores de natures différentes, il est possible d'obtenir un lumière blanche.

La technique actuelle permet de réaliser des tubes fluorescents émettant une lumière blanche dont le spectre est suffisamment pauvre en infrarouge pour permettre l'utilisation de jumelles à bas niveau de lumière. Mais les progrès constants réalisés dans la sensibilité des jumelles à bas niveau de lumière obligent à concevoir des boîtes à lumière ayant un rayonnement infrarouge de plus en plus réduit.

L'intensité lumineuse d'une boîte à lumière comportant un ou plusieurs tubes fluorescents peut être réglée dans un rapport de l'ordre de 1000 pour un tube à cathodes chaudes, ou dans un rapport de l'ordre de 300 pour un tube à cathodes froides, en agissant sur l'alimentation électrique de ce tube. Le réglage de l'intensité lumineuse peut être obtenu en faisant varier soit la tension, soit la fréquence, soit les deux à la fois, soit le rapport cyclique.

Cependant, ce procédé ne permet pas d'optimiser la consommation électrique pour tous les cas d'utilisation et il reste le problème de réduire au maximum les infrarouges pour l'utilisation de nuit.

Pour cette utilisation, il est envisageable d'éliminer ces infrarouges et de réduire l'intensité lumineuse de la boîte à lumière au moyen d'un filtre amovible interposé sur le chemin de la lumière, mais cette solution augmente l'encombrement de la boîte à lumière et complique sa réalisation mécanique. D'autre part, l'utilisation de l'énergie électrique n'est pas optimale puisqu'une grande partie de la lumière produite est éliminée par le filtre.

Le but de l'invention est d'optimiser l'utilisation de l'énergie électrique fournie à une boîte à lumière, dans tous les cas d'utilisation de cette boite à lumière. L'objet de l'invention est une boîte à lumière comportant deux dispositifs d'éclairage distincts, adaptés respectivement pour l'utilisation en plein jour et pour l'utilisation nocturne, en étant compatible avec l'utilisation de jumelles à bas niveau de lumière.

Selon l'invention il est réalisé une boîte à lumière pour un dispositif de visualisation avionique selon la revendication 1.

L'invention sera mieux comprise et d'autres détails apparaîtront à l'aide de la description ci-dessous et des figures l'accompagnant :
- la figure 1 représente une coupe schématique d'un exemple de réalisation d'une boîte à lumière selon l'invention ;
- la figure 2 représente schématiquement une vue de face de cet exemple de réalisation.

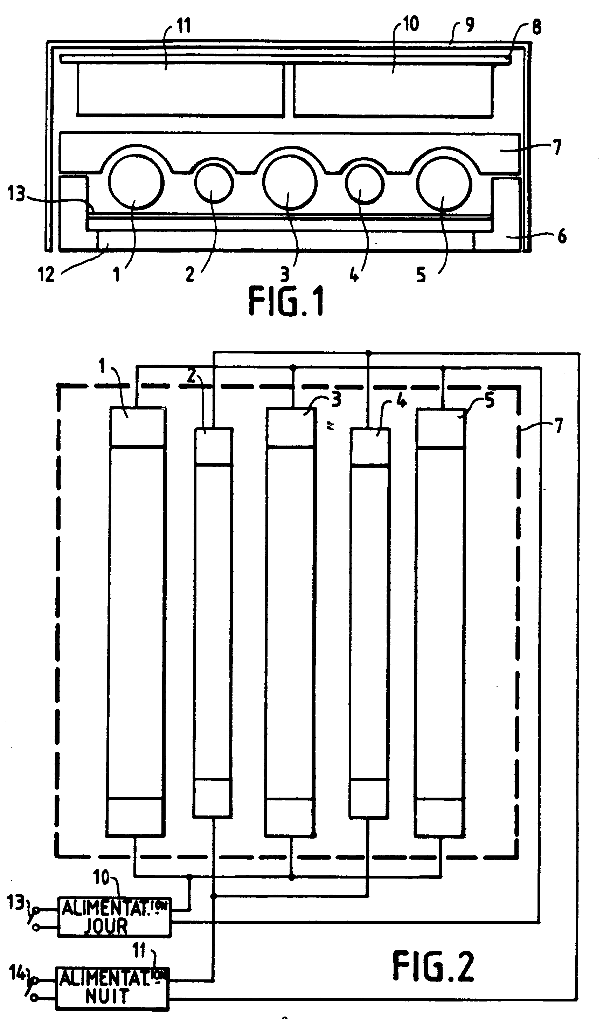

Sur la figure 1, l'exemple de réalisation représenté comporte : trois tubes fluorescents, 1,3,5 fournissant une lumière d'intensité suffisante pour obtenir un bon contraste en plein jour ; deux tubes fluorescents, 2 et 4, de taille inférieure à celle des tubes précédents et fournissant une lumière d'intensité inférieure à la précédente et ayant un spectre pauvre en infrarouge ; un cadre 6 supportant un écran à cristaux liquides 12, muni de son circuit électronique de commande ; un écran diffusant 13 intercalé entre les tubes fluorescents 1 à 5 et l'écran à cristaux liquides 12 ; un réflecteur 7 renvoyant la lumière des tubes 1 à 5 en direction de l'écran diffusant 13 ; une carte de circuits imprimés 8 supportant deux circuits d'alimentation, 10 et 11 ; et un boîtier 9 contenant l'ensemble des éléments de la boîte à lumière.

Les tubes 1 à 5 sont parallèles entre eux et situés dans un plan parallèle à celui de l'écran à cristaux liquides 12 et à celui de l'écran diffusant 13. De même, le réflecteur 7 et la carte de circuit imprimé 8 sont parallèles au plan de l'écran à cristaux liquides 12. Les tubes 1, 3, 5 sont répartis régulièrement de façon à fournir un éclairage aussi uniforme que possible sur la surface de l'écran diffusant 13. Le tube 2 est situé à mi-distance entre les tubes 1 et 3, et le tube 4 est situé à mi-distance entre les tubes 3 et 5 pour fournir aussi un éclairage aussi uniforme que possible, lorsqu'il fait nuit.

La figure 2 représente schématiquement, en vue de face, cette boîte à lumière, lorsque le cadre 6 supportant l'écran 12 à cristaux liquides, et l'écran diffusant 13, ont été enlevés. Il apparaît que les tubes 2 et 4 ont une longueur et un diamètre respectivement inférieurs à la longueur et au diamètre des tubes 1, 3, 5. Le réflecteur 7 est représenté schématiquement par un rectangle.

Les tubes 1, 3, 5 ont chacun deux bornes reliées respectivement à deux sorties d'un dispositif d'alimentation 10 appelé alimentation de jour. Les tubes 2 et 4 ont chacun deux bornes reliées respectivement à deux sorties d'un dispositif d'alimentation 11 appelé alimentation de nuit. Les dispositifs d'alimentation 10 et 11 sont commandés respectivement par des commutateurs 13 et 14. Pour l'utilisation de jour, l'alimentation 10 est seule mise en fonctionnement. Pour l'utilisation de nuit, l'alimentation 11 est seule mise en fonctionnement. La différence de taille des tubes et la différence du nombre de tubes procurent une différence d'intensité lumineuse correspondant aux deux utilisations différentes. Il est possible aussi de laisser en fonctionnement l'alimentation 11, aussi bien pendant le jour que pendant la nuit.

Les tubes 1 à 5 et les dispositifs d'alimentation 10 et 11 sont réalisés par des technologies classiques.

Les tubes 2 et 4 ayant une taille plus petite que les tubes 1, 3, 5 consomment moins d'énergie électrique mais aussi dissipent mieux la chaleur car leur petite taille facilite le refroidissement par convection naturelle. Par conséquent, leur échauffement est moindre. Pour un même type de phosphore utilisé, la lumière émise par les tubes 2 et 4 est donc moins riche en infrarouge que la lumière émise par les tubes 1, 3, 5. Ce phénomène contribue à rendre le dispositif d'éclairage de nuit, constitué par les tubes 2 et 4, compatible avec l'utilisation des jumelles à bas niveau de lumière. Ces tubes peuvent être des tubes à cathodes froides ou des tubes à cathodes chaudes. Les tubes à cathodes chaudes présentent l'avantage de fournir une plus grande quantité de lumière pour une puissance consommée donnée, mais ils dégagent plus de chaleur que les tubes à cathodes froides. Dans cette application, où il est nécessaire de limiter le plus possible la dissipation de chaleur, il est préférable d'utiliser des tubes à cathodes froides. D'autre part, ces tubes procurent une plus grande fiabilité de la boîte à lumière parce qu'ils ne nécessitent pas un circuit de chauffage qui peut être sujet à des pannes.

La réalisation de cette boîte à lumière peut comporter plusieurs variantes selon le spectre émis par les tubes. Selon une première variante, tous les tubes, 1 à 5, émettent une lumière blanche pauvre en infrarouge, obtenue par un mélange de phosphores de types connus. Cette variante de réalisation permet l'utilisation de la boîte à lumière dans un dispositif de visualisation polychrome de jour et de nuit, tout en permettant l'utilisation de jumelles à bas niveau de lumière ayant une sensibilité moyenne compatible avec l'émission d'infrarouges des tubes classiques émettant de la lumière blanche.

Selon une seconde variante, les tubes 1, 3, 5 sont des tubes émettant une lumière blanche permettant une visualisation polychrome, de jour, alors que les tubes 2 et 4 sont des tubes émettant une lumière verte exclusivement. La lumière émise dans les tubes 2 et 4 est alors particulièrement pauvre en infrarouge ce qui la rend compatible avec l'utilisation de jumelles à bas niveau de lumière ayant une sensibilité particulièrement élevée.

Selon une troisième variante, permettant une visualisation seulement monochrome, tous les tubes 1 à 5 sont des tubes émettant une lumière verte exclusivement. Comme la variante précédente, cette variante de réalisation est compatible avec l'utilisation de jumelles à bas niveau de lumière, ayant une sensibilité particulièrement élevée. D'autre part, cette variante a un rendement particulièrement élevé, aussi bien de jour que de nuit. En effet, l'oeil est particulièrement sensible à la lumière verte, ce qui permet d'obtenir une perception lumineuse environ deux fois plus importante avec une lumière verte plutôt qu'avec une lumière blanche, pour une puissance consommée donnée. Cet avantage est particulièrement important pour les applications où la consommation électrique doit être réduite au minimum. C'est le cas, par exemple, des dispositifs de visualisation utilisés en secours, parce qu'ils sont alimentés par un réseau de secours ayant une puissance réduite. D'autre part, une réduction de la puissance électrique consommée conduit à une réduction de l'échauffement, ce qui facilite la réalisation d'un dispositif de visualisation compact, et réduit l'émission infrarouge.

Ces trois variantes de réalisation ont en commun l'avantage d'optimiser l'utilisation de la puissance électrique consommée puisque la réduction de l'intensité lumineuse et la limitation de son spectre sont obtenues au moyen de deux dispositifs d'éclairage distincts respectivement pour le jour et pour la nuit, qui ont chacun un rendement optimisé, contrairement aux boîtes à lumière ayant un seul dispositif d'éclairage optimisé pour l'éclairage de jour et utilisées de manière non optimale pour fournir un éclairage de nuit.

La boîte à lumière selon l'invention comporte deux dispositifs d'alimentation distincts, 10 et 11 qui sont optimisés respectivement pour l'alimentation des tubes 1, 3, 5 et pour l'alimentation des tubes 2 et 4, mais cette optimisation n'exlut pas que les dispositifs 10 et 11 puissent avoir certains éléments communs. L'utilisation de composants communs pour les deux dispositifs d'alimentation, permet de réduire le coût et l'encombrement. Les commutateurs 13 et 14 ont alors pour fonction de modifier le régime de fonctionnement de ces composants communs, afin de modifier le niveau la puissance fournie.

La réalisation de ces dispositifs d'alimentation optimisés est à la portée de l'homme de l'art.

Le nombre et la forme des tubes utilisés sont choisis en fonction de la surface de l'écran à éclairer uniformément. Une variante de réalisation peut consister à remplacer ces tubes 1, 3, 5 par un tube unique, en zig-zag.

L'invention est applicable aux dispositifs de visualisation incorporés aux tableaux de bord des avions.

## Revendications

1. Boîte à lumière pour un dispositif de visualisation avionique, ce dispositif comprenant un écran à cristaux liquides transmettant la lumière fournie par la boîte à lumière, cette boîte a lumière comportant :
- un premier dispositif d'éclairage comportant au moins un premier tube fluorescent (1, 3, 5), pour fournir une lumière d'intensité suffisante pour obtenir un bon contraste en plein jour ;
caractérisée en ce que :
- le premier dispositif d'éclairage comporte de plus un dispositif (11) d'alimentation dudit premier tube fluorescent;
et en ce que la boîte à lumière comporte de plus
- un dispositif de commutation (13) pour éteindre le premier dispositif d'éclairage lorsqu'il fait nuit ;
- un second dispositif d'éclairage comportant au moins un second tube fluorescent (2, 4), de taille inférieure à celle du premier ou des premiers tubes (1, 3, 5) ; et fournissant une lumière pauvre en infrarouge et d'intensité inférieure à celle du premier dispositif d'éclairage (1, 3, 5).

2. Boîte à lumière selon la revendication 1, pour visualisation polychrome, caractérisée en ce que chaque premier tube (1, 3, 5) a un phosphore émettant une lumière blanche et en ce que chaque second tube (2, 4) a un phosphore émettant une lumière verte exclusivement.

3. Boîte à lumière selon la revendication 1, pour visualisation monochrome, caractérisée en ce que chaque premier tube (1, 3, 5) et chaque second tube (2, 4) a un phosphore émettant une lumière verte exclusivement.

## Patentansprüche

1. Beleuchtungsgehäuse für eine Avionik-Anzeigevorrichtung, wobei die Vorrichtung einen Flüssigkristallschirm aufweist, der das von dem Beleuchtungsgehäuse gelieferte Licht überträgt, wobei das Beleuchtungsgehäuse enthält:
- eine erste Beleuchtungsvorrichtung mit wenigstens einer ersten Leuchtstoffröhre (1, 3, 5) zur Lieferung einer Lichtstärke, die ausreicht, um bei vollem Tageslicht einen guten Kontrast zu erzielen;
dadurch gekennzeichnet,
- daß die erste Beleuchtungsvorrichtung wenigstens eine Vorrichtung (11) zum Speisen der ersten Leuchtstoffröhre enthält;
und daß das Beleuchtungsgehäuse außerdem enthält:
- eine Schaltvorrichtung (13) zum Löschen der ersten Beleuchtungsvorrichtung, wenn es Nacht wird;
- eine zweite Beleuchtungsvorrichtung mit wenigstens einer zweiten Leuchtstoffröhre (2, 4) mit einer kleineren Größe als die erste oder die ersten Röhren (1, 3, 5), die ein schwaches Licht im Infrarotbereich und mit einer Intensität liefert, die kleiner als die der ersten Beleuchtungsvorrichtung (1, 3, 5) ist.

2. Beleuchtungsgehäuse nach Anspruch 1 zur mehrfarbigen Anzeige, dadurch gekennzeichnet, daß jede erste Röhre (1, 3, 5) einen Leuchtstoff enthält, der weißes Licht aussendet, und daß jede zweite Röhre (2, 4) einen Leuchtstoff enthält, der ausschließlich grünes Licht aussendet.

3. Beleuchtungsgehäuse nach Anspruch 1 für eine einfarbige Anzeige, dadurch gekennzeichnet, daß jede erste Röhre (1, 3, 5) und jede zweite Röhre (2, 4) einen Leuchtstoff enthält, der ausschließlich grünes Licht aussendet.

## Claims

1. Light box for an avionic display device, this device comprising a liquid crystal screen transmitting the light supplied by the light box, this light box comprising:
- a first lighting device comprising at least one first fluorescent tube (1, 3, 5), for supplying light of sufficient intensity to obtain good contrast in full daylight;
characterised in that:
- the first lighting device further comprises a device (11) for powering the said fluorescent tube;
and in that the light box further comprises:
- a switching device (13) for extinguishing the first lighting device when it is night;
- a second lighting device comprising at least one second fluorescent tube (2, 4) of size less than that of the first tube or tubes (1, 3, 5); and supplying light which has a low infrared content and an intensity less than that of the first lighting device (1, 3, 5).

2. Light box according to Claim 1, for colour display, characterised in that each first tube (1, 3, 5) has a phosphor emitting bright light and in that each second tube (2, 4) has a phosphor emitting exclusively green light.

3. Light box according to Claim 1, for monochrome display, characterised in that each first tube (1, 3, 5) and each second tube (2, 4) has a phosphor emitting exclusively green light.
